# EUROPÄISCHE PATENTANMELDUNG

(11) **EP 3 332 678 A1**
(43) Veröffentlichungstag der Anmeldung: **13.06.2018**
(21) Anmeldenummer: 17201251.0
(22) Anmeldetag: 13.11.2017
(51) Int. Cl.: A47J 31/41, A47J 31/52

(54) **HAUSHALTGERÄT ZUR BEHANDLUNG VON LEBENSMITTELN**

(30) Priorität: 07.12.2016 DE 102016123655
(71) Anmelder: Miele & Cie. KG, 33332 Gütersloh (DE)
(72) Erfinder: Last, Mario, 33739 Bielefeld (DE); Tembaak, Jutta, 49492 Westerkappeln (DE)

(57) **Zusammenfassung**

Die Erfindung betrifft ein Haushaltgerät zur Behandlung von Lebensmitteln, umfassend einen Vorratsbehälter für ein zu behandelndes Lebensmittel, einen Detektor, der eingerichtet ist, ein Nahinfrarotspektrum des zu behandelnden Lebenmittels zu erfassen, und eine Steuereinrichtung, die eingerichtet ist, anhand des erfassten Nahinfrarotspektrums mindestans eine für die Behandlung relevante Stoffeigenschaft des Lebensmittels zu bestimmen und die Behandlung des Lebensmittels in Abhängigkeit von der bestimmten mindestens einen Stoffeigenschaft zu steuern.

## Beschreibung

Die vorliegende Erfindung betrifft ein Haushaltgerät zur Behandlung von Lebensmitteln, das die Behandlung des Lebensmittels basierend auf einer erfassten für die Behandlung relevanten Stoffeigenschaft steuern kann. Insbesondere betrifft die Erfindung einen Getränkebereiter zur Bereitung von Kaffee und/oder Milch enthaltenden Getränken, der eine automatische Geschmackseinstellung und/oder Überwachung der Haltbarkeit der zuzubereitenden Lebensmittel ermöglicht.

Auf Bohnenverpackungen von Kaffee ist in der Regel nicht der Koffeingehalt angegeben, dies gilt auch für andere Inhaltsstoffe wie in Bezug auf Säuregehalt, Bitterkeit. Der Kunde weiß im Idealfall lediglich, dass gewöhnlich bei Robusta-Bohnen der Koffeingehalt sowie die Bitterkeit höher sind, aber der Säuregehalt niedriger ist, und bei Arabica-Bohnen der Koffeingehalt sowie die Bitterkeit niedriger sind, aber der Säuregehalt höher ist. Entkoffeinierte Bohnen sollten kein Koffein enthalten. Bei Mischungen können die genannten Eigenschaften Koffeingehalt, Bitterkeit und Säure abhängig von den Anteilen ausfallen.

Wiederum hängen die geschmacklichen Eigenschaften eines daraus zubereiteten Kaffees von den Einstellungen des Kaffeebereiters ab, wie zum Beispiel Mahlgrad und Temperatur. Um einen gewünschten Geschmack bei einem Kaffee aus einem Vollautomaten zu erzielen, muss der Benutzer daher nach der Methode Versuch-und-Irrtum die Einstellungen nach und nach anpassen, bis der Kaffee so schmeckt, wie er sich das vorstellt. Bei einem Gerät mit mehreren Bohnenbehältern muss der Benutzer außerdem dafür sorgen, dass ein bestimmter Bohnenbehälter die jeweils richtige Sorte enthält, damit sichergestellt ist, dass er die gewählte Bohnensorte für das Getränk bekommt, beispielsweise, dass bei Anwahl eines koffeinfreien Kaffees auch der Bohnenbehälter verwendet wird, der die koffeinfreien Bohnen enthält.

Kaffee kann mit der Zeit sein Aroma verlieren oder sogar ranzig werden. Gerade bei Vollautomaten, bei denen sich der Kaffee je nach Nutzung längere Zeit im Bohnenbehälter befindet, kann es leicht passieren, dass der Benutzer dies erst dann bemerkt, wenn der Kaffee nicht mehr schmeckt, da er dies anders nicht ohne Weiteres erkennen kann. Es kommt dann häufig vor, dass der Benutzer fälschlicherweise davon ausgeht, dass am Kaffeebereiter etwas nicht mehr in Ordnung ist. Dass die Kaffeebohnen nicht mehr gut sind, wird meist nicht bedacht. Auch Milch ist ein Lebensmittel, das bei längerer Lagerung bei Raumtemperatur schnell verderben kann, oder anders gesagt sauer wird, sofern es sich nicht um H-Milch handelt. Für einen von Konsistenz und Geschmack her guten Milchschaum ist es jedoch sinnvoll, Vollmilch zu nehmen. Sobald die Milch beginnt, sauer zu werden, ist kein guter Milchschaum mehr möglich. Ist sie vollständig sauer geworden, ist gar kein Milchschaum mehr möglich. Außerdem schmecken Kaffee mit Milch oder allgemein Milch enthaltende Getränke mit saurer Milch nicht mehr. Die Milch führenden Leitungen verschmutzen durch saure Milch deutlich mehr und sind schwerer zu reinigen (Biofilmbildung, Keime). Dem Benutzer fällt in der Regel erst auf, dass die Milch nicht mehr genießbar ist, wenn Milchmischgetränke sauer schmecken öder die Milch sogar ausflockt und kein Milchschaum mehr herstellbar ist.

Außerdem schäumen verschiedene Milchsorten verschieden gut auf. Manche Milchersatzsorten wie Soja- oder Mandelmilch schäumen sehr schlecht oder gar nicht auf. Je nach Fett- und Eiweißgehalt verschmutzen die Leitungen auch mehr oder weniger und sie müssen häufiger oder seltener gereinigt werden. Dies erkennen herkömmliche Haushaltgeräte nicht und der Benutzer muss selber darauf achten, die Leitungen häufig genug zu reinigen. Oder das Gerät hat eine automatische Reinigung, die in der Regel auf den schlimmsten anzunehmenden Fall eingestellt ist, und somit unnötig häufig reinigt. Der Benutzer muss daher selbst Sorge dafür tragen, die richtige Sorte Milch zu verwenden und auf deren Haltbarkeit achten.

Derzeit gibt es bei Kaffeebereitern lediglich Sensoren, die den Füllstand des Bohnenbehälters oder Milchbehälters erfassen können beziehungsweise nur erfassen, ob der Behälter leer ist. Ein Erfassen der Sorte eingefüllter Bohnen ist nicht bekannt. Bei mehreren Bohnenbehältern muss der Benutzer manuell eine Beschriftung und/oder Zuordnung in den Einstellungen des Geräts vornehmen. Eine automatische Anpassung an Eigenschaften des zu behandelnden Lebensmittels wie Kaffee- oder Milchsorte ist nicht möglich. Ebenso findet keine Überwachung einer verfallsbedingten Verschlechterung eines im Gerät bevorrateten Lebensmittels statt.

Aus der Druckschrift US 2016 / 0 097 711 A1 ist ein Kaffeebereiter bekannt, der eingerichtet ist, die Farbe und den Mahlgrad von Kaffeepulver mittels Infrarotspektroskopie zu bestimmen.

Die Druckschrift DE 10 2012 220 995 B3 betrifft eine Getränkezubereitungseinrichtung mit einer Milchleitung zur Zufuhr von Milch aus einem Milchvorratsbehälter zu einer Ausgabeeinrichtung, mit einer Steuereinrichtung zur Steuerung der Milchzufuhr in Abhängigkeit von einer pH-Wert-Messung.

Daher besteht die Aufgabe der vorliegenden Erfindung darin, ein Haushaltgerät zur Behandlung von Lebensmitteln bereitzustellen, das sich einerseits automatisch auf für die Behandlung relevante Stoffeigenschaften des Lebensmittels einstellen kann, und das andererseits eine Verschlechterung bis hin zu einem Verderben des Lebensmittels erkennen kann. Die Aufgabe wird erfindungsgemäß gelöst durch ein Haushaltgerät gemäß Anspruch 1, wobei die abhängigen Ansprüche vorteilhafte Weiterbildungen angeben.

Gemäß einem Aspekt wird ein Haushaltgerät zur Behandlung von Lebensmitteln bereitgestellt, umfassend:
einen Vorratsbehälter für ein zu behandelndes Lebensmittel;
einen Detektor, der eingerichtet ist, ein Nahinfrarotspektrum des zu behandelnden Lebensmittels zu erfassen; und
eine Steuereinrichtung, die eingerichtet ist, anhand des erfassten Nahinfrarotspektrums mindestens eine für die Behandlung relevante Stoffeigenschaft des Lebensmittels zu bestimmen und die Behandlung des Lebensmittels in Abhängigkeit von der bestimmten mindestens einen Stoffeigenschaft zu steuern.

Die Nahinfrarotspektroskopie eignet sich besonders gut, um die spezifischen Stoffeigenschaften von Lebensmitteln wie beispielsweise Gehalte an Wasser, Fett, Eiweiß etc. zu bestimmen. Das erfindungsgemäße Gerät ist mittels des Detektors in der Lage, behandlungsrelevante Eigenschaften von im Gerät bevorrateten Lebensmitteln zu erfassen. Die Steuereinrichtung ist damit wiederum in der Lage, Parameter des Behandlungsvorgangs optimal auf die erfassten Stoffeigenschaften einzustellen. Ein manuelles Einstellen oder gar langwieriges Probieren gemäß "Versuch und Irrtum" durch den Benutzer entfällt somit.

Gemäß einer Ausführungsform ist die Steuereinrichtung weiter eingerichtet, in Abhängigkeit von der bestimmten mindestens einen Stoffeigenschaft Wartungsvorgänge zu steuern und/oder deren Notwendigkeit anzuzeigen.

Da Stoffeigenschaften wie beispielsweise Fett/Öl- und Eiweiß-Gehalte starken Einfluss auf die Verschmutzung von Leitungen und anderen Geräteteilen haben, die mit den jeweiligen Lebensmitteln in Kontakt kommen, können Wartungsvorgänge anhand der bestimmten Stoffeigenschaften optimal geplant werden. Automatische Reinigungsvorgänge können selbsttätig zu optimierten Zeitpunkten ausgeführt werden oder es kann zumindest dem Benutzer die Notwendigkeit einer manuellen Reinigung angezeigt werden. Zu häufiges Reinigen, welches erhöhten Verschleiß und Verbrauch an Wasser und Reinigungsmitteln zum Entfetten, Entfernen von Eiweißen oder Kalk bewirkt, oder auch zu seltenes Reinigen, was zu verminderter Leistungsfähigkeit bis hin zu Schäden am Gerät führen kann, können somit verhindert werden.

Die Steuereinrichtung ist eingerichtet, die mindestens eine Stoffeigenschaft des Lebensmittels zu verschiedenen Zeitpunkten zu bestimmen und eine Verschlechterung des Lebensmittels zu erkennen, wenn sich die mindestens eine Stoffeigenschaft des Lebensmittels gegenüber einem vorherigen Zeitpunkt um mehr als einen Schwellenwert geändert hat.

Auch ohne genaue Kenntnis der Zusammensetzung eines Lebensmittels kann durch die Aufnahme von "Fingerabdrücken" der jeweiligen Zusammensetzung eine Veränderung des Lebensmittels über die Zeit erkannt werden. Starke Veränderungen deuten mit hoher Wahrscheinlichkeit auf einen Verfall des Lebensmittels hin. Für bestimmte Lebensmittel typische Verläufe bestimmter bekannter Eigenschaften (Ranzigwerden von Kaffee, Sauerwerden von Milch) können dafür genutzt werden, sehr präzise Aussagen über den Haltbarkeitszustand zu treffen und entsprechend zu reagieren. So kann das Haushaltgerät bestimmte Behandlungsvorgänge bei einem erkannten Verderben gänzlich unterbinden (beispielsweise der Versuch des Aufschäumens von saurer Milch) oder zumindest den Benutzer darüber informieren. Auch eine frühzeitige Information (beispielsweise Geschmacksverlust von Kaffee) kann dem Benutzer gegeben werden, noch bevor ein Lebensmittel ungenießbar geworden ist. Damit kann der Benutzer selbst entscheiden, ob er das Lebensmittel bereits verwerfen oder noch vor dem Verfall aufbrauchen will.

Gemäß einer Ausführungsform umfasst das Haushaltgerät weiter:
einen Temperatursensor, der eingerichtet ist, die Temperatur eines Lebensmittels in dem mindestens einen Vorratsbehälter zu bestimmen,
wobei die Steuereinrichtung eingerichtet ist, die Bestimmung der mindestens einen Stoffeigenschaft des Lebensmittels zu verschiedenen Zeitpunkten von der Temperatur abhängig zu machen.

Eine Anwendung dieser Ausführungsform kann darin bestehen, erst nach Überschreiten einer für das jeweilige Lebensmittel optimalen Lagertemperatur (beispielsweise 8°C für Milch) mit dem Überwachen der Veränderung von Stoffeigenschaften zu beginnen, da bei ausreichender Kühlung nicht mit einer schnellen Verschlechterung zu rechnen ist. Alternativ oder zusätzlich kann auch die Häufigkeit der Erfassung von Stoffeigenschaften von der Temperatur abhängig gemacht werden, da die Temperatur üblicherweise einen großen Einfluss auf die Verschlechterung besitzt.

Gemäß einer Ausführungsform ist die Steuereinrichtung eingerichtet, auf eine Datenbank zuzugreifen, die Daten über Nahinfrarotspektren von Lebensmittel-Bestandteilen speichert, und durch Vergleich des erfassten Nahinfrarotspektrums mit gespeicherten Nahinfrarotspektren die mindestens eine für die Behandlung relevante Stoffeigenschaft des Lebensmittels zu bestimmen.

Es können beispielsweise die Nahinfrarotspektren von charakteristischen Bestandteilen von Lebensmitteln wie Kaffee oder Milch, etwa Säuren, Fette/Öle, Eiweiße in der Datenbank vorgehalten werden. Aus dem Nahinfrarotspektrum eines Lebensmittels, das eine Überlagerung der Einzelspektren aller Bestandteile darstellt, kann durch Vergleich mit den Einzelspektren ein bestimmter Inhaltsstoff identifiziert werden.

Gemäß einer Ausführungsform umfasst das Haushaltgerät weiter einen Speicher, der zumindest Teile der Datenbank enthält.

Die Datenbank kann zumindest teilweise oder auch vollständig in dem Gerät selbst gespeichert sein.

Gemäß einer Ausführungsform umfasst das Haushaltgerät weiter eine externe Datenschnittstelle, wobei zumindest Teile der Datenbank in einem in Bezug auf das Haushaltgerät externen Speicher enthalten sind, der über die externe Datenschnittstelle zugänglich ist.

Alternativ zu der Speicherung im Gerät selbst kann die Datenbank teilweise oder auch vollständig extern vorgehalten werden, so dass das Gerät über die externe Schnittstelle, beispielsweise eine Internetanbindung, darauf zugreifen kann. Mischformen sind ebenfalls möglich, d.h. die Datenbank ist teilweise intern und teilweise extern gespeichert. Dies gestattet es, eine überschaubare Datenmenge (z.B. von wenigen Grundkomponenten von Kaffee oder Milch) in dem Gerät selbst zu speichern, wobei bei Bedarf - etwa bei nicht möglicher oder nicht eindeutiger Identifizierung eines Teil-Infrarotspektrums - zusätzlich auf den externen Teil der Datenbank zugegriffen werden kann.

Gemäß einer Ausführungsform umfasst das Haushaltgerät weiter:
zwei oder mehr Vorratsbehälter für jeweils ein zu behandelndes Lebensmittel; und
Eingabemittel für eine Eigenschaft eines auszugebenden Lebensmittels, das durch Behandeln der zwei oder mehr bevorrateten Lebensmittel erzeugt wird;
wobei der Detektor eingerichtet ist, ein Nahinfrarotspektrum der zwei oder mehr zu behandelnden Lebensmittel zu erfassen; und
wobei die Steuereinrichtung eingerichtet ist, anhand des erfassten Nahinfrarotspektrums mindestens eine für die Behandlung relevante Stoffeigenschaft der zwei oder mehr Lebensmittel zu bestimmen, und die Behandlung der zwei oder mehr Lebensmittel in Abhängigkeit von der eingegebenen Eigenschaft des auszugebenden Lebensmittels und der bestimmten mindestens einen Stoffeigenschaft der zwei oder mehr Lebensmittel zu steuern.

Beispiele für ein Gerät gemäß dieser Ausführungsform sind ein Kaffeebereiter mit zwei oder mehr Bohnenbehältern oder auch einem Bohnenbehälter und einem Milchbehälter. Das auszugebende Lebensmittel wäre dann entsprechend ein Kaffeegetränk, das aus mindestens zwei verschiedenen Bohnensorten zubereitet wird, oder ein Kaffee-Milch-Mischgetränk ist, das aus einer oder mehreren Bohnensorten und Milch zubereitet wird. Durch das Erfassen von Stoffeigenschaften ist das Gerät in der Lage, automatisch eine Zuordnung der Behälter zu den jeweiligen eingefüllten Lebensmittelns herzustellen, so dass gezielt entsprechende Mischgetränke erzeugt werden können, die zwei oder mehr Eingangs-Lebensmittel verwenden.

Im Beispiel des Kaffeegetränks könnte etwa ein Bohnenbehälter entkoffeinierte Bohnen enthalten und ein anderer koffeinhaltige Bohnen. Je nach Wahl des Benutzers könnte somit ein Kaffeegetränk mit einem einstellbaren Koffeingehalt aus den zwei Bohnensorten bereitet werden. In einem anderen Beispiel könnte ein Bohnenbehälter reine Robusta-Bohnen und ein anderer reine Arabica-Bohnen enthalten, so dass ein Kaffeegetränk mit einer einstellbaren Mischung aus Robusta und Arabica bereitet werden kann.

Denkbar sind auch mehrere Milchbehälter, wobei beispielsweise einer normale Milch und ein anderer ein Milchersatzprodukt wie Sojamilch enthält. Je nach Auswahl des Getränks kann dann ein entsprechendes Lebensmittel für Milchschaum verwendet werden, für Personen mit Unverträglichkeiten beispielsweise mit Soja- statt normaler Milch.

Gemäß einer Ausführungsform ist das Haushaltgerät ein Getränkebereiter, ist mindestens eines der zu behandelnden Lebensmittel Kaffee und ist das auszugebende Lebensmittel ein Kaffeegetränk.

Gemäß einer Ausführungsform ist die relevante Eigenschaft des Kaffees und/oder ist die Eigenschaft des auszugebenden Kaffeegetränks eines oder mehrere von Kaffeesorte, Koffeingehalt, Säuregehalt, Bitterstoffgehalt und Ölgehalt.

Gemäß einer Ausführungsform ist die Steuereinrichtung eingerichtet, in Abhängigkeit von dem Ölgehalt Reinigungsvorgänge der mit Kaffee in Berührung kommenden Teile des Haushaltgeräts zu steuern und/oder deren Notwendigkeit anzuzeigen.

Gemäß einer Ausführungsform ist das Haushaltgerät ein Getränkebereiter, ist mindestens eines der zu behandelnden Lebensmittel Milch und ist das auszugebende Lebensmittel ein Milchgetränk.

Gemäß einer Ausführungsform ist die Behandlung ein Aufschäumen der Milch und ist die relevante Stoffeigenschaft der Haltbarkeitszustands und/oder der Eiweiß- und/oder Proteingehalt und/oder die Sorte der Milch, und wobei die Steuereinrichtung eingerichtet ist, das Aufschäumen von Milch in Abhängigkeit von der Eignung für das Aufschäumen basierend auf der relevanten Stoffeigenschaft zu steuern.

Gemäß einer Ausführungsform ist die Steuereinrichtung eingerichtet ist, in Abhängigkeit von der relevanten Stoffeigenschaft Reinigungsvorgänge der Milch führenden Teile des Haushaltgeräts zu steuern und/oder deren Notwendigkeit anzuzeigen.

Gemäß einer Ausführungsform
ist der Detektor innerhalb des Vorratsbehälters angeordnet, oder
ist der Detektor in der Nähe des oder angrenzend an den Vorratsbehälter angeordnet, wobei der Vorratsbehälter ein infrarotdurchlässiges Fenster für den Detektor aufweist.

Ein Beispiel für einen Vorratsbehälter mit innerhalb angeordnetem Detektor könnte ein Bohnenbehälter eines Kaffeebereiters sein. Ein Beispiel für einen Vorratsbehälter mit externem Detektor und einem dafür vorgesehenen Fenster könnte ein Milchbehälter eines Kaffeebereiters sein, wobei der Milchbehälter nicht in dem Geräteinnenraum angeordnet, sondern an der Außenseite des Geräts angedockt ist.

Kurze Beschreibung der Figuren
- Fig. 1: zeigt eine Ausführungsform eines Haushaltsgeräts gemäß der Erfindung in einer dreidimensionalen Schnittansicht;
- Fig. 2: zeigt den Schnitt der Ausführungsform von Fig. 1 in Draufsicht;

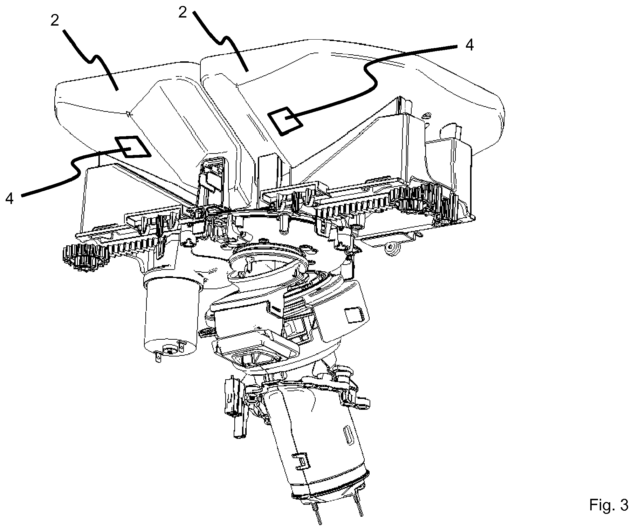

- Fig. 3: zeigt weitere Teile einer Ausführungsform analog der Fig. 1 in einer dreidimensionalen Schnittansicht;
- Fig. 4: zeigt schematisch Merkmale einer Ausführungsform der Erfindung für Kaffeebereiter mit mehreren Bohnenbehältern;
- Fig. 5: zeigt schematisch Merkmale einer Ausführungsform der Erfindung zur Geschmackseinstellung bei Kaffeegetränken;
- Fig. 6: zeigt schematisch Merkmale einer Ausführungsform der Erfindung für Kaffeegetränke; und

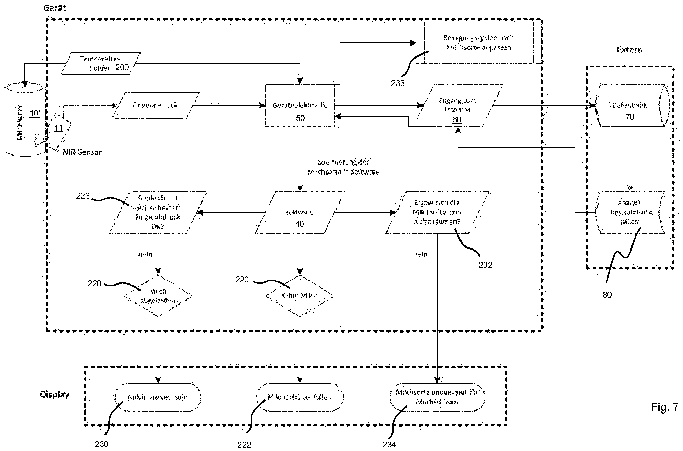

- Fig. 7: zeigt schematisch Merkmale einer Ausführungsform der Erfindung für Milchgetränke.

Es ist anzumerken, dass im Kontext dieser Anmeldung der Begriff Milch sowohl tierische Produkte als auch pflanzliche Stoffe wie Sojamilch, Mandelmilch etc. umfasst. Weiterhin wird die folgende Beschreibung zwar beispielhaft Kaffee und Milch als zu behandelnde Lebensmittel beschreiben, die Erfindung ist aber nicht darauf beschränkt.

Der im Folgenden verwendet Begriff Steuereinrichtung beinhaltet gemäß dieser Anmeldung Hardware, Software und auch Kombinationen davon.

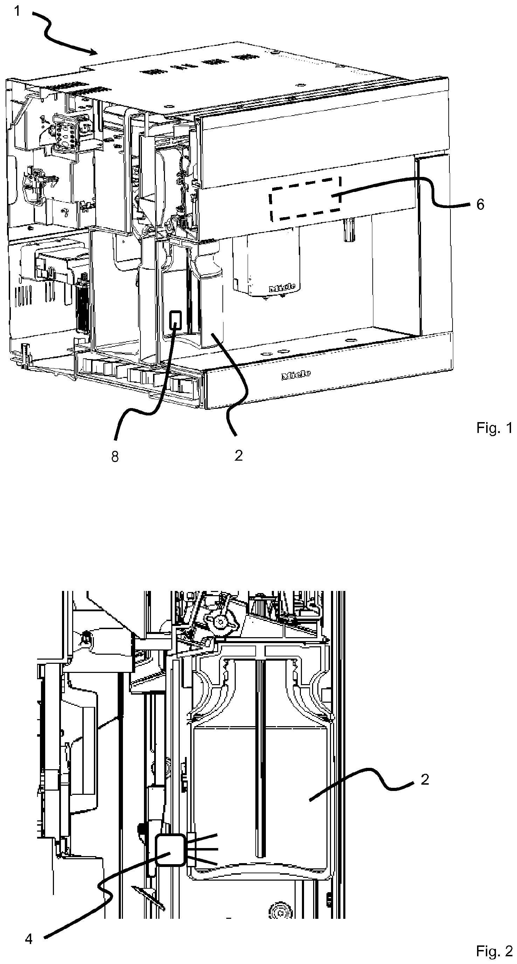

In Figur 1 ist eine Ausführungsform eines Haushaltsgeräts gemäß der Erfindung in einer dreidimensionalen Schnittansicht gezeigt, in diesem Fall ein Kaffeevollautomat 1. Der Kaffeevollautomat 1 besitzt einen oder mehrere Bohnenbehälter (nicht gezeigt), einen Milchbehälter 2 und eine Steuereinrichtung 6 (nicht von außen sichtbar, daher hier gestrichelt dargestellt). Der Vorratsbehälter 2 für Milch besitzt in dieser Ausführungsform ein Fenster 8, das für Infrarotstrahlung durchlässig ist. Das Fenster 8 kann bevorzugt auch in Form eines durchgehenden vertikalen Streifens ausgeführt sein, oder der Vorratsbehälter 2 kann vollständig oder zumindest von der minimalen bis zur maximalen Füllhöhe der Milch aus einem infrarotdurchlässigen Material bestehen. Ein eventuelles Untergrundspektrum des Materials kann einfach herausgerechnet werden.

Der Kaffeevollautomat 1 weist ferner einen (nicht gezeigten) Detektor auf, der eingerichtet ist, ein Nahinfrarotspektrum der Milch zu erfassen. Der Detektor ist in dem Kaffeevollautomaten 1 so angeordnet, dass das Fenster 8 vor ihm angeordnet ist, wenn der Milchbehälter 2 betriebsbereit angedockt ist. Der Milchbehälter 2 stellt ein Beispiel eines extern angedockten Behälters im Sinne der Erfindung dar.

In Figur 2 ist die Ausführungsform der Figur 1 in einer anderen Ansicht dargestellt, nämlich in einer Draufsicht auf einen Teil der Schnittfläche. Der in der Ansicht von Figur 1 verdeckte Detektor 4 ist hier benachbart zu dem Fenster in dem Vorratsbehälter 2 gezeigt. Der Detektor 4 ist mit der Steuereinrichtung verbunden und kann Infrarotstrahlen durch das Fenster in den Behälter 2 abgeben, um ein Nahinfrarotspektrum des Lebensmittels in dem Vorratsbehälter 2, hier beispielhaft Milch, aufzunehmen. Dadurch kann der Detektor 4 auch die Aufgabe eines herkömmlichen Füllstands-Sensors mit übernehmen, da ein leerer Behälter ein eindeutig zuzuordnendes Spektrum besitzt.

Die eigentliche Aufgabe des Detektors 4 besteht aber darin, ein Nahinfrarotspektrum eines in dem Behälter befindlichen Lebensmittels zu erfassen. Daraus ergeben sich erfindungsgemäß verschiedene Anwendungen. Einerseits kann von der Steuereinrichtung aus dem Nahinfrarotspektrum auf die Stoffeigenschaften des Lebensmittels geschlossen werden, um die Behandlung durch das Haushaltsgerät entsprechend zu steuern. Da jedes Lebensmittel einen charakteristischen "Fingerabdruck" in Form eines Nahinfrarotspektrums bzw. einer Überlagerung der Nahinfrarotspektren aller beteiligten Komponenten besitzt, kann so umgekehrt aus dem Fingerabdruck darauf geschlossen werden, um welches Lebensmittel es sich handelt und/oder welche Eigenschaften es aufweist. Im Falle des beispielhaften Lebensmittels Milch etwa, ob es sich um eine Milch tierischen Ursprungs oder eine pflanzliche Milch wie Soja- oder Mandelmilch handelt, sowie der jeweilige Protein- und Fettgehalt.

Basierend auf dieser Erkennung kann von der Steuereinrichtung beurteilt werden, ob und wie gut sich die Milch zum Bereiten von Milchgetränken wie Cappuccino eignet. Wird die Milch als wenig geeignet oder ungeeignet beurteilt, Milchschaum zu erzeugen, kann dies dem Benutzer angezeigt werden und/oder der Bezug von Milchgetränken deaktiviert werden. Für Benutzer mit Unverträglichkeiten kann ein entsprechender Hinweis ausgegeben werden, um den versehentlichen Genuss etwa von Milch tierischen Ursprungs zu verhindern.

Je nach Fett- und Proteingehalt werden die milchführenden Teile mehr oder weniger schnell verschmutzen. Weiterhin kann die Steuereinrichtung daher basierend auf den erkannten Eigenschaften der Milch Reinigungs- und/oder Wartungsvorgänge der milchführenden Teile entsprechend planen bzw. steuern. Möglich sind die Ausgabe einer Aufforderung an den Benutzer, ein Reinigungsprogramm durchzuführen, oder das Ausführen einer automatischen Reinigung. Die jeweilige Häufigkeit bzw. der Zeitpunkt können von der Steuereinrichtung entsprechend gesteuert werden.

Eine weitere Anwendung besteht darin, die Haltbarkeit bzw. Frische des Lebensmittels zu überwachen. Einerseits könnte anhand des Nahinfrarotspektrums das Auftreten von bestimmten Komponenten erfasst werden, die ein Verderben des Lebensmittels nahelegen, bei Milch etwa durch das Sauerwerden oder bei Kaffee durch das Ranzigwerden. Aus dem Gehalt an diesen Substanzen, die erst beim Verderben des Lebensmittels entstehen, könnte auf den Frischezustand geschlossen und entsprechend reagiert werden. Bei saurer Milch etwa könnte der Bezug von Milchgetränken deaktiviert werden, da diese nicht schmecken und das Gerät durch deren Verarbeitung wesentlich stärker verschmutzen würde. Analog könnte auch beim Nichtvorhandensein oder Abbau von Substanzen, die bei einem frischen Lebensmittel enthalten sind, auf ein Verderben geschlossen werden.

Zusätzlich oder alternativ kann aber auch ohne genaue Kenntnis von Substanzen, die ein Verderben bzw. die Frische anzeigen, auf den Zustand des Lebensmittels geschlossen werden. Dazu wird zu aufeinander folgenden Zeitpunkten wiederkehrend der Infrarot-Fingerabdruck erfasst. Unter den zwei Annahmen, dass ein frisches Lebensmittel sich nicht sehr stark verändern wird, ohne dabei zu verderben, und dass das Lebensmittel beim Einfüllen in das Gerät frisch ist, kann dann anhand der relativen Änderung des Fingerabdrucks darauf geschlossen werden, ob ein Verderben bzw. allgemein ein Degenerieren auftritt oder nicht. Dazu wird ein Schwellenwert für die erlaubte Veränderung vorgegeben, dessen Überschreitung auf ein Verderben schließen lässt.

Zusätzlich zu den vorstehend genannten Ausführungen wird es durch die Erfindung ermöglicht, dass der Benutzer, beispielsweise über das Einstellungsmenü des Haushaltsgeräts, Informationen über die jeweiligen Arten von Lebensmitteln abruft, die in den Vorratsbehältern vorgehalten werden. Dadurch muss er sich nicht merken bzw. nicht nachsehen, was sich in welchem Behälter befindet. Da die Bestandteile von Kaffee, Milch etc. in der Regel nicht detailliert auf den Verpackungen angegeben sind, kann der Benutzer auch mehr Informationen erhalten, als dies normalerweise möglich ist.

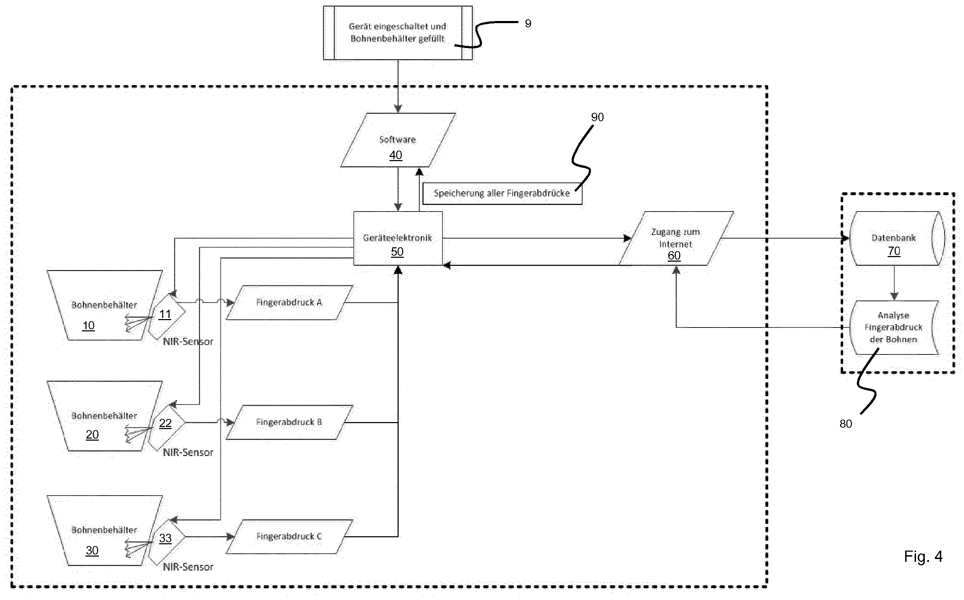

In Figur 4 ist schematisch eine Ausführungsform der Erfindung für Kaffeebereiter mit mehreren Bohnenbehältern gezeigt. Zuerst wird das Gerät eingeschaltet und die Bohnenbehälter werden gefüllt (Schritt 9). In dem hier gezeigten Beispiel sind drei Bohnenbehälter 10, 20, 30 in dem Gerät vorhanden, beispielsweise für zwei verschiedene Kaffeesorten wie Espresso und Cafe Crema sowie eine entkoffeinierte Kaffeesorte. Die Software 40 in der Steuereinrichtung des Geräts steuert die Geräteelektronik 50 an, die über einen NIR-Sensor 11, 22, 33 an jedem Bohnenbehälter einen Infrarotspektrums-Fingerabdruck A, B bzw. C für jede Kaffeesorte erstellt. Die Fingerabdrücke werden mittels der Software 40 gespeichert 90.

Die Steuereinrichtung erhält über die Geräteelektronik 50 einen drahtlosen oder drahtgebundenen Internetzugang 60 und übermittelt die Fingerabdrücke A, B und C an eine extern gespeicherte Datenbank 70. Anhand der Daten erfolgt weiterhin extern eine Analyse 80 der jeweiligen Fingerabdrücke der Bohnen, d.h. es wird die Kaffeesorte bzw. deren Inhaltsstoffe bestimmt. Diese Informationen werden über den Internetzugang 60 an das Gerät zurückgesendet. Die Steuereinrichtung kann nun mittels der Software 40 den drei Bohnenbehältern 10, 20, 30 die erkannten Kaffeesorten und/oder Inhaltsstoffe zuordnen und dies speichern. In der hier gezeigten Ausführungsform werden auch die Rohdaten, d.h. die erfassten Fingerabdrücke gespeichert 90, um eine Überwachung des Frischezustandes der Bohnen zu ermöglichen.

In der hier gezeigten Ausführungsform erfolgt die Verarbeitung der Fingerabdrücke in Bezug auf das Gerät extern. Der Vorteil besteht hierbei darin, dass das Haushaltsgerät weniger Rechenleistung und Speicherplatz benötigt, außerdem ist es einfacher, die extern vorgehaltene Datenbank zu aktualisieren. In anderen Ausführungsformen kann dies jedoch ebenso rein intern in Bezug auf das Gerät erfolgen. In diesem Fall ist eine interne Datenbank und Rechenleistung vorhanden, um die erfassten Fingerabdrücke analysieren zu können. In noch weiteren Ausführungsformen kann eine Kombination vorgesehen sein, beispielsweise in der Art, dass bestimmte Lebensmittel (etwa gängige Kaffeesorten) oder typische Inhaltsstoffe mittels intern gespeicherter Daten verarbeitet werden, wobei nur bei dem Gerät unbekannten Lebensmitteln und/oder Inhaltsstoffen auf eine externe Datenbank zugegriffen wird.

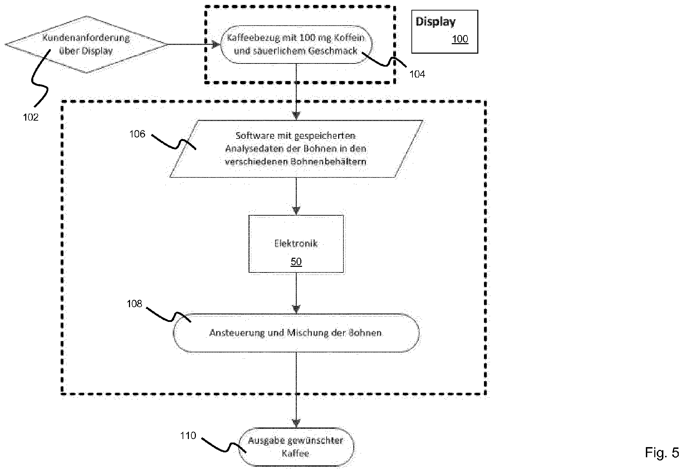

Figur 5 zeigt eine Ausführungsform der Erfindung zur Geschmackseinstellung bei Kaffeegetränken anhand der Inhaltsstoffe des Kaffees. In Schritt 102 erfolgt eine Kundenanforderung über das Display 100. Angefordert wird (Schritt 104) ein Kaffee mit 100 mg Koffein und einer beispielsweise 20%igen Säure. Die Software führt in Schritt 106 anhand der gespeicherten Daten der bevorrateten Bohnen und anhand des angeforderten Kaffees eine Bestimmung durch, ob und falls ja wie die geforderten Eigenschaften mittels der vorhandenen Bohnen erreicht werden können, d.h. mit welchen Mengen aus verschiedenen Bohnenbehältern. Sollte mit den vorhandenen Bohnen das angeforderte Kaffeegetränk nicht darstellbar sein, in diesem Beispiel, falls die Bohnen kein oder nicht genügend Koffein enthalten oder nicht genügend Säure, wird dies dem Benutzer angezeigt und der Bezug abgebrochen. Optional kann ein Kaffeegetränk angeboten werden, das mit den vorhandenen Bohnen darstellbar ist und zumindest ähnliche Eigenschaften wie der angeforderte Kaffee besitzt, zum Beispiel 90 mg Koffein und 15% Säure.

Sofern das gewünschte Kaffeegetränk darstellbar ist bzw. ein darstellbares Kaffeegetränk vom Benutzer ausgewählt wurde, steuert die Elektronik 50 in Schritt 108 die Bohnenbehälter nacheinander an, lässt die bestimmte Menge aus jedem Bohnenbehälter mahlen und steuert die Brüheinheit an, um den gewünschten Kaffee zu brühen. In Schritt 110 wird dann der gewünschte Kaffee ausgegeben.

Der hier für ein Kaffeegetränk beschriebene Vorgang kann analog auf Milchgetränke, d.h. Getränke, die Milch und optional Kaffee enthalten, angewendet werden. In dem Gerät können etwa zwei Milchbehälter vorhanden sein, einer für Milch tierischen Ursprungs und ein anderer für einen Milchersatz wie Sojamilch. Hierbei würde dann in der Regel ausschließlich die vom Benutzer gewünschte Milchsorte verwendet, wobei ein Mischen auch prinzipiell möglich wäre. Denkbar ist auch, bei Schichtgetränken wie Latte macchiato verschiedene Milchsorten für die verschiedenen Schichten zu verwenden, z.B. besser schäumende Milch für den Milchschaum. Oder es kann für heiße Schokolade eine andere Milchsorte verwendet werden als für Milchschaum auf Cappuccino.

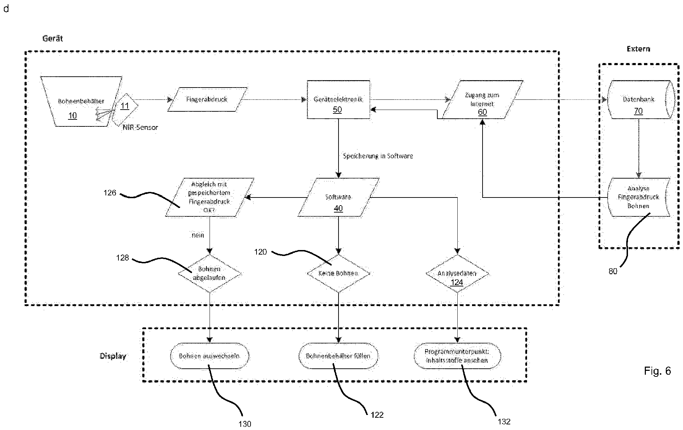

In Figur 6 sind schematisch Merkmale einer Ausführungsform der Erfindung für Kaffeegetränke gezeigt. Die Elemente bzw. Schritte Bohnenbehälter, NIR-Sensor, Fingerabdruck, Geräteelektronik 50, Zugang zum Internet 60, Datenbank 70, Analyse Fingerabdruck Bohnen 80, Speicherung in Software 90, Software 40 entsprechen denen der Figur 4.

Die Software 40 kann anhand der Analyse der Bohnen erkennen (Schritt 120), ob der Bohnenbehälter leer ist. Daraufhin wird im Display 100 eine Meldung 122 ausgegeben, den Bohnenbehälter zu füllen. Es besteht auch die Möglichkeit, die vorhandenen Analysedaten 124 dazu zu verwenden, dem Benutzer in einem Programmunterpunkt des Bedienmenüs des Haushaltsgeräts die erkannten Inhaltsstoffe anzuzeigen (Schritt 132).

In Schritt 126 kann zu aufeinander folgenden Zeitpunkten jeweils ein aktueller Fingerabdruck der Bohnen erfasst werden. Dieser wird dann mit einem zuvor erfassten Fingerabdruck verglichen, bevorzugt einem, der direkt nach dem Befüllen des Behälters erfasst wurde. Wird in Schritt 126 festgestellt, dass der Fingerabdruck sich um mehr als eine vorgebbare Toleranz verändert hat, wird davon ausgegangen, dass die Haltbarkeit der Bohnen abgelaufen ist (Schritt 128) bzw. die Bohnen verdorben sind. Der Benutzer erhält eine Aufforderung 130, die Bohnen auszuwechseln. Beispielsweise kann in dem Fingerabdruck für einzelne Substanzen, die entweder ein frisches oder verdorbenes Lebensmittel anzeigen, eine Schwelle vorgegeben werden. Das Auftreten von z.B. ranzigen Bestandteilen bei Kaffeebohnen oder ein erhöhter Säuregehalt bei saurer Milch kann ein Verderben anzeigen. Umgekehrt kann auch das starke Abnehmen/Fehlen von Inhaltsstoffen, die im frischen Lebensmittel vorhanden sein sollten, ein Verderben anzeigen, beispielsweise ätherischer Öle in Kaffee.

Es ist anzumerken, dass erfindungsgemäß unter "Verderben" auch eine rein geschmackliche Verschlechterung verstanden wird, wobei das Lebensmittel grundsätzlich noch bedenkenlos genießbar wäre.

In Figur 6 sind schematisch Merkmale einer Ausführungsform der Erfindung für Milchgetränke gezeigt. Die Elemente bzw. Schritte NIR-Sensor 11, Fingerabdruck, Geräteelektronik 50, Zugang zum Internet 60, Datenbank 70 und Software 40 entsprechen denen der Figur 6. Abweichend ist hier statt des Bohnenbehälters eine Milchkanne 10' vorhanden. Entsprechend erfolgt in Schritt 90' eine Analyse des Infrarot-Fingerabdrucks der Milch, und wird die Milchsorte gespeichert. Ferner ist zusätzlich ein Temperatursensor bzw. Temperaturfühler 200 für die Milch in der Milchkanne 10' vorgesehen. Diese Ausführungsform dient zur Erkennung der Milchsorte, des Kanneninhaltes und der Milchhaltbarkeit. Ferner kann eine Reinigung der Milchleitungen entsprechend gesteuert/geplant werden.

Die Ansteuerung des NIR-Sensors zum Erkennen der Milch kann in einem oder mehreren der folgenden Fälle erfolgen:
- immer, wenn der Milchbehälter eingesetzt wird;
- wenn ein Getränk mit Milch oder Milchschaum angefordert wird;
- in regelmäßigen Zeit-Intervallen, wobei, sobald der Temperaturfühler an die Elektronik eine Temperatur > beispielsweise 8 °C sendet, die Dauer der Intervalle herabgesetzt werden kann, d.h. häufiger erfasst wird.

Über den Temperaturfühler 200 in der Milchkanne 10' wird über die Elektronik 50 die Temperatur der Milch überwacht. Sobald die Temperatur > 8 °C ist, kann beispielsweise eine stündliche Überwachung 226' der Milch mittels NIR erfolgen.

In der Software 40 sind Milchsorten hinterlegt, mit denen Milchschaum möglich ist. Wird in Schritt 220 erkannt, dass keine Milch in dem Behälter 10' vorhanden ist, erhält der Benutzer eine Aufforderung 222, Milch einzufüllen. Wird anhand des Fingerabdrucks in Schritt 232 erkannt, dass sich die erkannte Milchsorte nicht zum Aufschäumen eignet, wird in Schritt 234 dem Benutzer bei Anforderung von Milchschaum bzw. einem Getränk mit Milchschaum angezeigt, dass mit dieser Milch kein Milchschaum möglich ist

Wenn die Milch beginnt sauer zu werden, ist das Casein denaturiert, so dass das Milchfett nicht mehr emulgiert wird. Dadurch ändert sich das NIR-Spektrum und damit der Fingerabdruck und das Gerät erkennt (Schritt 228'), dass die Milch nicht mehr gut ist. Dies wird dem Benutzer über das Display mitgeteilt (Schritt 230'). Bevorzugt wird in Schritt 230 bis zum Erkennen eines Auswechselns der Bezug von Milchgetränken deaktiviert, um eine Verschmutzung des Geräts durch die verdorbene Milch zu verhindern.

Zusätzlich ist anhand des Fingerabdrucks der Milch eine Einschätzung möglich, wann und/oder wie häufig eine Reinigung der Milch leitenden Teile des Haushaltsgeräts erforderlich ist. Dem Benutzer kann dann angezeigt werden, wann/dass eine manuelle Reinigung erforderlich ist. Sofern das Haushaltsgerät eine automatische Reinigung besitzt, kann diese anhand der erkannten Milchsorte bzw. deren Fett-/Eiweißgehalt entsprechend gesteuert werden. Eine Reinigung, insbesondere eine automatische, wird daher nur so oft ausgeführt, wie wirklich nötig. Das spart Energie, Reinigungsmittel und kann auch die Lebensdauer der entsprechenden Teile des Haushaltsgeräts verlängern.

## Patentansprüche

1. Haushaltgerät (1) zur Behandlung von Lebensmitteln, umfassend:
einen Vorratsbehälter (2) für ein zu behandelndes Lebensmittel;
einen Detektor (4), der eingerichtet ist, ein Nahinfrarotspektrum des zu behandelnden Lebensmittels zu erfassen; und
eine Steuereinrichtung (6), die eingerichtet ist, anhand des erfassten Nahinfrarotspektrums mindestens eine für die Behandlung relevante Stoffeigenschaft des Lebensmittels zu bestimmen und die Behandlung des Lebensmittels in Abhängigkeit von der bestimmten mindestens einen Stoffeigenschaft zu steuern;
**dadurch gekennzeichnet, dass**
die Steuereinrichtung (6) eingerichtet ist, die mindestens eine Stoffeigenschaft des Lebensmittels zu verschiedenen Zeitpunkten zu bestimmen und eine Verschlechterung des Lebensmittels zu erkennen, wenn sich die mindestens eine Stoffeigenschaft des Lebensmittels gegenüber einem vorherigen Zeitpunkt um mehr als einen Schwellenwert geändert hat.

2. Haushaltgerät gemäß Anspruch 1, wobei die Steuereinrichtung (6) weiter eingerichtet ist, in Abhängigkeit von der bestimmten mindestens einen Stoffeigenschaft Wartungsvorgänge zu steuern und/oder deren Notwendigkeit anzuzeigen.

3. Haushaltgerät gemäß Anspruch 1 oder 2, weiter umfassend:
einen Temperatursensor (200), der eingerichtet ist, die Temperatur eines Lebensmittels in dem mindestens einen Vorratsbehälter (2) zu bestimmen,
wobei die Steuereinrichtung (6) eingerichtet ist, die Bestimmung der mindestens einen Stoffeigenschaft des Lebensmittels zu verschiedenen Zeitpunkten von der Temperatur abhängig zu machen.

4. Haushaltgerät gemäß einem der vorhergehenden Ansprüche, wobei die Steuereinrichtung (6) eingerichtet ist, auf eine Datenbank (70) zuzugreifen, die Daten über Nahinfrarotspektren von Lebensmittel-Bestandteilen speichert, und durch Vergleich des erfassten Nahinfrarotspektrums mit gespeicherten Nahinfrarotspektren die mindestens eine für die Behandlung relevante Stoffeigenschaft des Lebensmittels zu bestimmen.

5. Haushaltgerät gemäß Anspruch 4, weiter umfassend einen Speicher, der zumindest Teile der Datenbank (70) enthält.

6. Haushaltgerät gemäß Anspruch 4 oder 5, weiter umfassend eine externe Datenschnittstelle (60), wobei zumindest Teile der Datenbank (70) in einem in Bezug auf das Haushaltgerät (1) externen Speicher enthalten sind, der über die externe Datenschnittstelle (60) zugänglich ist.

7. Haushaltgerät gemäß einem der vorhergehenden Ansprüche, umfassend:
zwei oder mehr Vorratsbehälter (2) für jeweils ein zu behandelndes Lebensmittel; und
Eingabemittel für eine Eigenschaft eines auszugebenden Lebensmittels, das durch Behandeln der zwei oder mehr bevorrateten Lebensmittel erzeugt wird;
wobei der Detektor (4) eingerichtet ist, ein Nahinfrarotspektrum der zwei oder mehr zu behandelnden Lebensmittel zu erfassen; und
wobei die Steuereinrichtung (6) eingerichtet ist, anhand des erfassten Nahinfrarotspektrums mindestens eine für die Behandlung relevante Stoffeigenschaft der zwei oder mehr Lebensmittel zu bestimmen, und die Behandlung der zwei oder mehr Lebensmittel in Abhängigkeit von der eingegebenen Eigenschaft des auszugebenden Lebensmittels und der bestimmten mindestens einen Stoffeigenschaft der zwei oder mehr Lebensmittel zu steuern.

8. Haushaltgerät gemäß einem der vorhergehenden Ansprüche, wobei das Haushaltgerät ein Getränkebereiter ist, mindestens eines der zu behandelnden Lebensmittel Kaffee und das auszugebende Lebensmittel ein Kaffeegetränk ist.

9. Haushaltgerät gemäß Anspruch 8, wobei die relevante Eigenschaft des Kaffees und/oder die Eigenschaft des auszugebenden Kaffeegetränks eines oder mehrere von Kaffeesorte, Koffeingehalt, Säuregehalt, Bitterstoffgehalt und Ölgehalt ist.

10. Haushaltgerät gemäß Anspruch 10, wobei die Steuereinrichtung (6) eingerichtet ist, in Abhängigkeit von dem Ölgehalt Reinigungsvorgänge der mit Kaffee in Berührung kommenden Teile des Haushaltgeräts (1) zu steuern und/oder deren Notwendigkeit anzuzeigen
